# FASCICULE DE BREVET EUROPEEN

(11) **EP 2 943 357 B1**
(45) Date de publication et mention de la délivrance du brevet: **21.12.2016**
(21) Numéro de dépôt: 14700087.1
(22) Date de dépôt: 07.01.2014
(51) Int. Cl.: B60C 1/00, C08K 5/098, C08L 7/00

(54) **PRODUIT SEMI-FINI ET PNEUMATIQUE COMPRENANT UNE COMPOSITION COMPRENANT UN INHIBITEUR DE CORROSION**
HALBZEUG UND REIFEN MIT EINER ZUSAMMENSETZUNG MIT EINEM KORROSIONSHEMMER
SEMI-FINISHED PRODUCT AND TYRE COMPRISING A COMPOSITION CONTAINING A CORROSION INHIBITOR

(30) Priorité: 08.01.2013 FR 1350126
(43) Date de publication de la demande: 18.11.2015
(73) Titulaire: Compagnie Générale des Etablissements Michelin, 63000 Clermont-Ferrand (FR); Michelin Recherche et Technique S.A., 1763 Granges-Paccot (CH)
(72) Inventeur: BELIN, Lionel, F-63040 Clermont-Ferrand Cedex 9 (FR); BALORIN, Marine, F-63040 Clermont-Ferrand Cedex 9 (FR); TADJOA, Odile, F-63040 Clermont-Ferrand Cedex 9 (FR); FRISCH, Auriane, F-63040 Clermont-Ferrand Cedex 9 (FR)
(74) Mandataire: Desbordes, Guillaume
(86) Numéro de dépôt international: PCT/EP2014/050136
(87) Numéro de publication internationale: WO 2014/108391

(56) Documents cités:
- JP-A- 2002 348 575
- JP-A- 2005 220 396
- US-A- 4 725 340
- US-A1- 2011 263 761

## Description

L'invention concerne un produit semi-fini et un pneumatique comprenant une composition comprenant un inhibiteur de corrosion ainsi que son utilisation.

On connalt de l'état de la technique une composition pour pneumatique comprenant du caoutchouc naturel en tant qu'élastomère diénique, du noir de carbone et/ou de la silice en tant que charge renforçante, un système de vulcanisation comprenant du soufre et divers additifs comprenant notamment des inhibiteurs de corrosion.

La composition est utilisée pour la fabrication de produits semi-finis comprenant des éléments de renfort métalliques, par exemple des câbles métalliques, noyés dans la composition de caoutchouc. Lors de l'utilisation du pneumatique, des agents corrosifs, par exemple de l'eau, peuvent pénétrer au contact des éléments de renfort métalliques et les corroder, dégradant ainsi rapidement leurs propriétés mécaniques et d'adhésion à la composition de caoutchouc.

L'inhibiteur de corrosion permet, d'une part, de prévenir l'action des agents corrosifs grâce à la formation d'un film protecteur autour de l'élément de renfort métallique et, d'autre part, par adsorption sur l'élément de renfort métallique, de ralentir voire de stopper l'action corrosive des agents corrosifs sur l'élément de renfort métallique.

On connalt du document JP05177772 une composition comprenant un dérivé de la famille des triazines en tant qu'inhibiteur de corrosion. Toutefois, un tel composé est relativement cher. De plus, on souhaite autant que possible limiter la quantité à employer de composés pouvant avoir un Impact environnemental.

L'invention a pour but un inhibiteur de corrosion efficace et environnementalement neutre.

A cet effet, l'invention a pour objet un produit semi-fini comprenant un élément de renfort métallique noyé dans une composition de caoutchouc comprenant un composé de formule (I) : 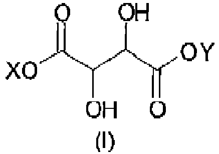 dans laquelle X, Y représentent, Indépendamment l'un de l'autre, un cation alcalin ou alcalino-terreux.

Le produit semi-fini selon l'invention permet de réduire voire de supprimer le risque de corrosion de l'élément de renfort métallique.

D'une part, les composés de formule (I) captent les agents corrosifs avant qu'ils n'atteignent l'élément de renfort métallique.

D'autre part, la composition permet également de limiter l'action corrosive des agents corrosifs sur les éléments de renforts métalliques. En effet, on suppose que les composés de formule (I) sont transportés par l'agent corrosif, par exemple l'eau, et migrent à travers la composition jusqu'à l'élément de renfort métallique où ils s'adsorbent sur une surface externe de l'élément de renfort et bloquent l'action des agents corrosifs.

Les composés de formule (I) sont couramment appelés sels de tartrate et sont relativement neutres à l'égard de l'environnement.

Dans un mode de réalisation préférentiel, l'élément de renfort métallique est revêtu d'une couche de cuivre ou de laiton ce qui, entre autres, permet d'améliorer l'adhésion du caoutchouc à l'élément de renfort métallique par sulfuration de cette couche lors de la cuisson. Les composés de formule (I) n'inhibent pas cette sulfuration et donc ne nuisent pas à l'adhésion entre l'élément de renfort métallique et la composition de caoutchouc.

La composition peut se trouver sous forme crue ou vulcanisée.

Des exemples de produits semi-finis sont des nappes d'armature de sommet et des nappes d'armature de carcasse.

Par composition de caoutchouc, on entend que la composition comprend au moins un élastomère ou un caoutchouc (les deux termes étant synonymes) et au moins un autre composant.

Dans la présente description, sauf indication expresse différente, tous les pourcentages (%) indiqués sont des % en poids. Le sigle « pce » signifie parties en poids pour cent parties d'élastomère solide.

De préférence, X, Y sont choisis parmi Na⁺, K⁺ et Ca²⁺.

Dans le cas où X ou Y représente Ca²⁺, on comprend que ce cation est partagé par deux anions, en d'autres termes que la quantité d'anions est égale à deux fois la quantité de cations.

Dans un mode de réalisation, X=Y

Dans un autre mode de réalisation, X≠Y

Avantageusement, X représente Na⁺ et Y représente K⁺.

De préférence, la composition comprend au moins 0,1 pce borne incluse du composé de formule (I).

De préférence, la composition comprend au plus 2 pce borne incluse, de préférence au plus 1 pce borne incluse et plus préférentiellement au plus 0,7 pce borne incluse du composé de formule (I).

De préférence, la composition comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière particulièrement préférentielle, l'élastomère diénique de la composition est choisi dans le groupe des élastomères diéniques constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) a sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyles, nécessitant l'utilisation d'un agent de couplage pour établir la liaison entre la charge et l'élastomère.

Le taux de charge renforçante totale (noir de carbone et/ou charge inorganique renforçante telle que silice) est compris dans un domaine de 5 à 120 pce bornes incluses, plus préférentiellement de 5 à 70 pce bornes incluses et plus préférentiellement également de 5 à 60 pce bornes incluses.

Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice. On pourra ainsi utiliser une seule silice ou un coupage de plusieurs silices différentes.

Lorsqu'une charge inorganique (par exemple de la silice) est utilisée dans la composition, seule ou en coupage avec du noir de carbone, son taux est compris dans un domaine de 0 à 70 pce bornes incluses, préférentiellement de 0 à 60 pce bornes incluses, en particulier également de 5 à 70 pce bornes incluses, et encore plus préférentiellement cette proportion varie de 5 à 60 pce bornes incluses.

De préférence, la composition comprend une charge renforçante comprenant majoritairement en poids de la silice et plus préférentiellement comprenant uniquement de la silice. Par majoritairement, on comprend que la proportion en poids de silice est supérieure à la proportion en poids du reste des autres charges renforçantes de la composition, que ces charges soient organiques, comme par exemple le noir de carbone, ou inorganiques.

De façon avantageuse, la composition comprend au moins 30 pce borne incluse et de préférence au moins 40 pce borne incluse de silice.

De préférence, la composition comprend des additifs divers.

Les compositions peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que des anti-oxydants, des agents anti-fatigue, des résines renforçantes telles que des bismaleimides, des accepteurs (par exemple résine phénolique novolaque) ou des donneurs de méthylène (par exemple HMT ou H3M).

Comme présenté ci-dessus, on utilise un inhibiteur de corrosion conforme à la formule (I).

De préférence, la composition comprend un système de réticulation, plus préférentiellement de vulcanisation.

Le système de réticulation, ici de vulcanisation, comprend des agents donneurs de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur.

Avantageusement, l'accélérateur est choisi parmi le tétrabenzylthiuram disulfure (en abrégé "TBZTD") et la famille des sulfénamides constituée par le disulfure de 2-mercaptobenzothiazyle (en abrégé "MBTS"), le N-cyclohexyl-2-benzothiazyle sulfénamide (en abrégé "CBS"), le N,N-dicyclohexyl-2-benzothiazyle sulfénamide (en abrégé "DCBS"), le N-ter-butyl-2-benzothiazyle sulfénamide (en abrégé "TBBS"), le N-ter-butyl-2-benzothiazyle sulfénimide (en abrégé "TBSI") et les mélanges de ces composés.

De façon optionnelle, le système de vulcanisation comprend également un retardateur de vulcanisation tel que le N-(Cyclohexylthio)phthalimide (en abrégé "CTP").

Le soufre ou agent donneur de soufre est utilisé à un taux préférentiel compris entre 0,5 et 10 pce bornes incluses, plus préférentiellement compris entre 0,5 et 8,0 pce bornes incluses et très préférentiellement entre 2,0 et 8,0 pce bornes incluses. L'ensemble des accélérateurs, retardateurs et activateurs de vulcanisation est utilisé à un taux préférentiel compris entre 0,5 et 15 pce bornes incluses. Le ou les activateurs de vulcanisation est ou sont utilisés à un taux préférentiel compris entre 0,5 et 10 pce bornes incluses.

Un autre objet de l'invention est un pneumatique comprenant un élément de renfort métallique noyé dans une composition de caoutchouc comprenant un composé de formule (I) :

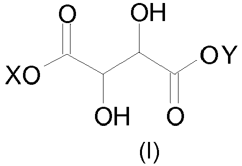

dans laquelle X, Y représentent, indépendamment l'un de l'autre, un cation alcalin ou alcalino-terreux.

La composition de caoutchouc dans laquelle est noyée l'élément de renfort métallique est uniforme, c'est-à-dire identique en chaque point de la masse de caoutchouc.

L'invention a encore pour objet l'utilisation d'un composé de formule (I): 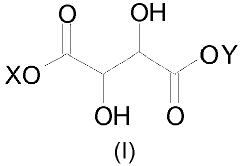 dans laquelle X, Y représentent, indépendamment l'un de l'autre, un cation alcalin ou alcalino-terreux comme inhibiteur de corrosion dans une composition de caoutchouc dans laquelle est noyé un élément de renfort métallique.

Les caractéristiques décrites ci-dessus relatives au produit semi-fini peuvent également s'appliquer au pneumatique et à l'utilisation décrites précédemment.

L'invention sera mieux comprise à la lecture de la description qui va suivre, donnée uniquement à titre d'exemple non limitatif.

### TESTS COMPARATIFS

On a comparé une composition T conforme à l'état de la technique connu de l'homme du métier dépourvue d'inhibiteur de corrosion et des compositions 1 à 6 de produits semi-finis ou de pneumatiques conformes à l'invention.

Les quantités des composants des compositions T et 1 à 6 des produits semi-finis ou de pneumatiques selon l'invention sont rassemblées dans le tableau 1 ci-dessous et sont exprimées en parties pour 100 parties en poids d'élastomère (pce).

**Tableau 1**

| **Composition** | **T** | **1** | **2** | **3** | **4** | **5** | **6** |
|---|---|---|---|---|---|---|---|
| X | / | Na⁺ | Na⁺ | Na⁺ | K⁺ | K⁺ | Ca²⁺ |
| Y | / | K⁺ | Na⁺ | Na⁺ | K⁺ | K⁺ | Ca²⁺ |
| Elastomère diénique | 100 | 100 | 100 | 100 | 100 | 100 | 100 |
| Noir de carbone | 4 | 4 | 4 | 4 | 4 | 4 | 4 |
| Silice | 40 | 40 | 40 | 40 | 40 | 40 | 40 |
| Anti-oxydant | 2 | 2 | 2 | 2 | 2 | 2 | 2 |
| Organosilane | 4 | 4 | 4 | 4 | 4 | 4 | 4 |
| ZnO | 8 | 8 | 8 | 8 | 8 | 8 | 8 |
| Acide stéarique | 1 | 1 | 1 | 1 | 1 | 1 | 1 |
| Soufre | 6 | 6 | 6 | 6 | 6 | 6 | 6 |
| Accélérateur | 1 | 1 | 1 | 1 | 1 | 1 | 1 |
| Retardateur | 0,2 | 0,2 | 0,2 | 0,2 | 0,2 | 0,2 | 0,2 |
| Inhibiteur de corrosion | 0 | 0,5 | 0,2 | 0,4 | 0,2 | 0,4 | 0,3 |

### Compositions testées

Chaque composition 1 à 6 comprend au moins 0,1 pce borne incluse et au plus 2 pce borne incluse, de préférence au plus 1 pce borne incluse et plus préférentiellement au plus 0,7 pce borne incluse du composé de formule (I).

Dans les compositions du tableau 1, l'élastomère diénique est du caoutchouc naturel. La silice est une silice type"HD"-"Zeosil 1165MP"de la société RHODIA. Le noir de carbone est du type N330. L'anti-oxydant est le N-1, 3-diméthylbutyl-N-phényl-para-phénylènediamine ("Santoflex 6-PPD"de la société FLEXSYS). L'organosilane est le TESPT ("Si69" de la société EVONIK). L'accélérateur de vulcanisation est le N-cyclohexyl-2-benzothiazyl-sulfénamide ("Santocure CBS" de la société FLEXSYS). Le retardateur de vulcanisation de la composition T est le N-(Cyclohexylthio)phthalimide (n°CAS 17796-82-6). Les inhibiteurs de corrosions sont disponibles auprès de la société Sigma-Aldrich.

### Préparation des compositions testées

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase"productive") à plus basse température, typiquement inférieure à 110°C, par exemple entre 60°C et 100°C, phase de finition au cours de laquelle est incorporé le système de vulcanisation. De telles phases ont été décrites par exemple dans les documents précités EP 501227, EP 735088, WO00/05300, WO00/05301 ou WO02/083782.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante, anti-oxydant, inhibiteur de corrosion et agent de couplage), puis dans un deuxième temps, par exemple après une à deux minutes de malaxage, les éventuels agents de mise en oeuvre complémentaires et autres additifs divers, à l'exception du système de vulcanisation. Lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc utilisé pour la fabrication de produits semi-finis selon l'invention tels que des nappes d'armatures de sommet, des nappes d'armatures de carcasse ou de produit fini tel qu'un pneumatique selon l'invention dans lesquels un élément de renfort métallique est noyé dans la composition de caoutchouc.

La vulcanisation (ou cuisson) est conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté, de la cinétique de vulcanisation de la composition considérée ou de la taille du pneumatique.

### Test d'adhésion

On réalise un test d'arrachement conformément à la norme ASTM D2229 sur des éprouvettes comprenant des câbles métalliques de structure 2.30NF dont une portion est intercalée entre deux bandes réalisées dans une composition de caoutchouc et une autre portion est laissée libre.

On mesure la force nécessaire pour arracher le câble des deux bandes de caoutchouc. On réalise la mesure pour 15 câbles. La valeur retenue est la moyenne des mesures sur ces 15 câbles. Plus la valeur de la force est élevée plus l'adhésion entre le câble et la composition de caoutchouc est grande.

Si, pour la composition testée, la force nécessaire à l'arrachement est supérieure à la force nécessaire à l'arrachement des câbles de l'éprouvette témoin, l'adhésion des câbles à la composition de caoutchouc testée est meilleure que celle de l'éprouvette témoin et donc la valeur relative retenue est supérieure à 100 (la valeur relative de l'éprouvette témoin est égale à 100). A l'inverse, si, pour une composition donnée, la force nécessaire à l'arrachement est inférieure à la force nécessaire à l'arrachement des câbles de l'éprouvette témoin, l'adhésion des câbles à la composition de caoutchouc testée est moins bonne que celle de l'éprouvette témoin et donc la valeur relative retenue est inférieure à 100.

Le test d'adhésion décrit ci-dessus est réalisé avec des éprouvettes vulcanisées et/ou vieillies dans différentes conditions A, B, C et D.

La condition A (cuisson normale) correspond à un test effectué sur une éprouvette cuite pendant une durée inférieure à 1 heure à une température supérieure à 100°C.

La condition B (vieillissement humide à cru) correspond à un test effectué sur une éprouvette comprenant la composition crue et vieillie pendant plusieurs jours à une température supérieure à 30°C et à plus de 50% d'humidité relative.

La condition C (vieillissement sous atmosphère corrosive) correspond à un test effectué sur une éprouvette comprenant la composition crue et vieillie pendant plusieurs jours dans une solution de NaCl.

La condition D (vieillissement humide à cuit) correspond à un test effectué sur une éprouvette cuite pendant une durée inférieure à 1 heure à une température supérieure à 100°C et vieillie pendant plusieurs jours à une température supérieure à 30°C et à plus de 50% d'humidité relative.

On a rassemblé les résultats du test d'adhésion dans les différentes conditions dans le tableau 2 ci-dessous.

**Tableau 2**

| | **T** | **1** | **2** | **3** | **4** | **5** | **6** |
|---|---|---|---|---|---|---|---|
| **A** | 100 | 105 | 100 | 100 | 100 | 100 | 100 |
| **B** | 100 | 104 | 110 | 108 | 109 | 100 | 105 |
| **C** | 100 | 110 | 108 | 110 | 110 | 110 | 108 |
| **D** | 100 | 108 | 100 | 100 | 100 | 100 | 100 |

Les compositions des produits semi-finis ou des pneumatiques selon l'invention présentent des performances d'adhésion proches, voire supérieures à la composition T de l'état de la technique pour la plupart des conditions de test. En particulier, on notera que toutes les compositions des produits semi-finis ou des pneumatiques selon l'invention présentent des performances d'adhésion dans des conditions corrosives (condition C) supérieures à celle de la composition T. Les compositions des produits semi-finis ou des pneumatiques selon l'invention permettent donc d'inhiber la corrosion créée par les agents corrosifs dans la plupart des conditions.

### Propriétés avant cuisson

### Plasticité Mooney

La plasticité Mooney est réalisée en utilisant un consistomètre selon la norme ASTM D-1646-99. La mesure de plasticité Mooney se fait selon le principe suivant : le mélange généralement cru est moulé dans une enceinte cylindrique chauffée à une température donnée, usuellement 100°C et ici 60°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Propriétés après cuisson

### Essais de traction

Ces essais de traction permettent de déterminer les contraintes d'élasticité et les propriétés à la rupture des compositions de gomme. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% d'allongement (notés MA10), à 100% d'allongement (notés MA100) et à 300% d'allongement (notés MA300).

On a rassemblé les résultats des mesures de propriétés avant et après cuisson de la composition « Témoin » et de la composition 1 dans le tableau 3 ci-dessous. Les valeurs des différentes propriétés sont indiquées en unité relative (U.R) par rapport aux valeurs des propriétés correspondantes de la composition T. Lorsque la valeur de la propriété est supérieure à 100, la valeur de la propriété est supérieure à celle de la composition T. A l'inverse, lorsque la valeur de la propriété est inférieure à 100, la valeur de la propriété est inférieure à celle de la composition T.

**Tableau 3**

| **Composition** | **T** | **1** |
|---|---|---|
| **Propriétés avant cuisson** | | |
| Mooney (U.R) | 100 | 101 |

| **Propriétés après cuisson** | | |
|---|---|---|
| MA10 (U.R) | 100 | 102 |
| MA100 (U.R) | 100 | 103 |
| MA300 (U.R) | 100 | 103 |

La plasticité Mooney et les modules sécants nominaux à 10%, 100% et 300% de la composition 1 sont peu modifiés par rapport à ceux de la composition T.

L'invention ne se limite pas aux modes de réalisation précédemment décrits.

On pourra également prévoir de mélanger plusieurs inhibiteurs de corrosion.

L'invention pourra être mise en oeuvre avec des fils unitaires ou bien des câbles, par exemple des câbles à une couche, à plusieurs couches ou à torons.

On pourra également combiner les caractéristiques des différents modes de réalisation et variantes décrits ou envisagés ci-dessus sous réserve que ceux-ci soient compatibles entre eux.

## Revendications

1. Produit semi-fini, **caractérisée en ce qu**'il comprend un élément de renfort métallique noyé dans une composition de caoutchouc comprenant un composé de formule (I) : 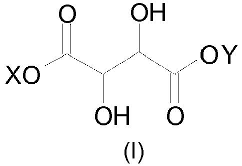 dans laquelle X, Y représentent, indépendamment l'un de l'autre, un cation alcalin ou alcalino-terreux.

2. Produit semi-fini selon la revendication précédente, dans lequel X, Y sont choisis parmi Na⁺, K⁺ et Ca²⁺.

3. Produit semi-fini selon la revendication 1 ou 2, dans lequel X=Y

4. Produit semi-fini selon la revendication 1 ou 2, dans lequel X≠Y

5. Produit semi-fini selon la revendication précédente, dans lequel X représente Na⁺ et Y représente K⁺.

6. Produit semi-fini selon l'une quelconque des revendications précédentes, dans lequel la composition comprend au moins 0,1 pce borne incluse du composé de formule (I).

7. Produit semi-fini selon l'une quelconque des revendications précédentes, dans lequel la composition comprend au plus 2 pce borne incluse, de préférence au plus 1 pce borne incluse et plus préférentiellement au plus 0,7 pce borne incluse du composé de formule (I).

8. Pneumatique, **caractérisé en ce qu**'il comprend un élément de renfort métallique noyé dans une composition de caoutchouc comprenant un composé de formule (I) : 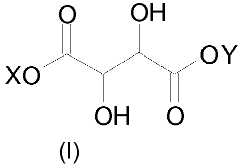 dans laquelle X, Y représentent, indépendamment l'un de l'autre, un cation alcalin ou alcalino-terreux.

9. Utilisation d'un composé de formule (I) : 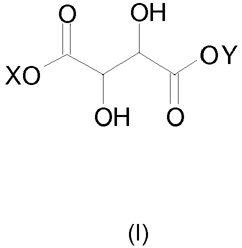 dans laquelle X, Y représentent, indépendamment l'un de l'autre, un cation alcalin ou alcalino-terreux comme inhibiteur de corrosion dans une composition de caoutchouc dans laquelle est noyé un élément de renfort métallique.

## Patentansprüche

1. Halbzeug, **dadurch gekennzeichnet, dass** es ein metallisches Verstärkungselement umfasst, das in eine Kautschukzusammensetzung eingebettet ist, die eine Verbindung der Formel (I) umfasst: 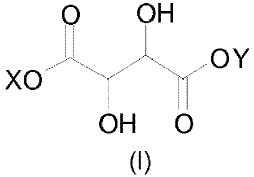 wobei X und Y unabhängig voneinander für ein Alkali- oder Erdalkalikation stehen.

2. Halbzeug nach dem vorhergehenden Anspruch, wobei X und Y aus Na⁺, K⁺ und Ca²⁺ ausgewählt sind.

3. Halbzeug nach Anspruch 1 oder 2, wobei X = Y.

4. Halbzeug nach Anspruch 1 oder 2, wobei X ≠ Y.

5. Halbzeug nach dem vorhergehenden Anspruch, wobei X für Na⁺ steht und Y für K⁺ steht.

6. Halbzeug nach einem der vorhergehenden Ansprüche, wobei die Zusammensetzung mindestens 0,1 phe einschließlich Grenzwert der Verbindung der Formel (I) umfasst.

7. Halbzeug nach einem der vorhergehenden Ansprüche, wobei die Zusammensetzung höchstens 2 phe einschließlich Grenzwert, vorzugsweise höchstens 1 phe einschließlich Grenzwert und weiter bevorzugt höchstens 0,7 phe einschließlich Grenzwert der Verbindung der Formel (I) umfasst.

8. Reifen, **dadurch gekennzeichnet, dass** er ein metallisches Verstärkungselement umfasst, das in eine Kautschukzusammensetzung eingebettet ist, die eine Verbindung der Formel (I) umfasst: 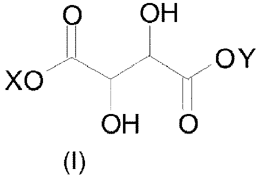 wobei X und Y unabhängig voneinander für ein Alkali- oder Erdalkalikation stehen.

9. Verwendung einer Verbindung der Formel (I): 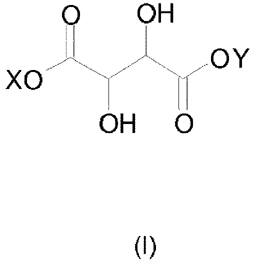 wobei X und Y unabhängig voneinander für ein Alkali- oder Erdalkalikation stehen, als Korrosionsinhibitor in einer Kautschukzusammensetzung, in der ein metallisches Verstärkungselement eingebettet ist.

## Claims

1. Semi-finished product, **characterized in that** it comprises a metal reinforcing element embedded in a rubber composition comprising a compound of formula (I): 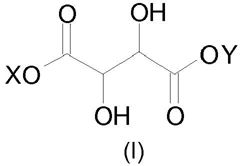 in which X and Y represent, independently of one another, an alkali metal or alkaline earth metal cation.

2. Semi-finished product according to the preceding claim, in which X and Y are chosen from Na⁺, K⁺ and Ca²⁺.

3. Semi-finished product according to Claim 1 or 2, in which X=Y

4. Semi-finished product according to Claim 1 or 2, in which X≠Y

5. Semi-finished product according to the preceding claim, in which X represents Na⁺ and Y represents K⁺.

6. Semi-finished product according to any one of the preceding claims, in which the composition comprises at least 0.1 phr, limit included, of the compound of formula (I).

7. Semi-finished product according to any one of the preceding claims, in which the composition comprises at most 2 phr, limit included, preferably at most 1 phr, limit included, and more preferably at most 0.7 phr, limit included, of the compound of formula (I).

8. Tyre, **characterized in that** it comprises a metal reinforcing element embedded in a rubber composition comprising a compound of formula (I): 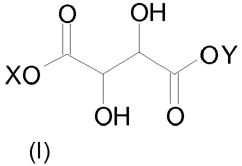 in which X and Y represent, independently of one another, an alkali metal or alkaline earth metal cation.

9. Use of a compound of formula (I): 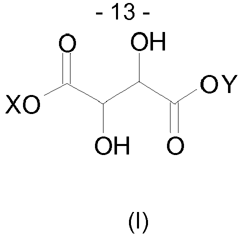 in which X and Y represent, independently of one another, an alkali metal or an alkaline earth metal cation, as corrosion inhibitor in a rubber composition in which metal reinforcing element is embedded.
